Europäisches Patentamt

European Patent Office

Office européen des brevets

(19)

(11) Veröffentlichungsnummer: **0 141 194**
**B1**

(12) **EUROPÄISCHE PATENTSCHRIFT**

(45) Veröffentlichungstag der Patentschrift: **18.07.90**

(51) Int. Cl.⁵: **H 04 L 7/04**

(21) Anmeldenummer: **84110935.8**

(22) Anmeldetag: **13.09.84**

(54) Schaltungsanordnung zur Rahmen- und Phasensynchronisation eines empfangsseitigen Abtasttaktes.

(30) Priorität: **17.09.83 DE 3333714**

(43) Veröffentlichungstag der Anmeldung:
**15.05.85 Patentblatt 85/20**

(45) Bekanntmachung des Hinweises auf die
Patenterteilung:
**18.07.90 Patentblatt 90/29**

(84) Benannte Vertragsstaaten:
**AT BE DE FR GB NL**

(56) Entgegenhaltungen:
EP-A-0 084 787
DE-A-3 227 151
GB-A-1 478 709

**DEUXIEME COLLOQUE INTERNATIONAL SUR LES TELECOMMUNICATIONS NUMERIQUES PAR SATELLITE, Paris, 28.-30. November 1972, Seiten 33-39, Editions Chiron, FR; P. KAUL: "An all-digital variable threshold codeword correlator"**

(73) Patentinhaber: **ALCATEL N.V.
Strawinskylaan 537 (World Trade Center)
NL-1077 XX Amsterdam (NL)**
(84) **BE FR GB NL AT**

(73) Patentinhaber: **Standard Elektrik Lorenz Aktiengesellschaft
Hellmuth-Hirth-Strasse 42
D-7000 Stuttgart 40 (DE)**
(84) **DE**

(72) Erfinder: **Szèchènyi, Kàlmàn
Bergstrasse 115
D-7151 Spiegelberg (DE)**

(74) Vertreter: **Villinger, Bernhard, Dipl.-Ing. et al
Standard Elektrik Lorenz AG Patent- und Lizenzwesen Postfach 30 09 29
D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung zur Rahmen- und Phasensynchronisation eines empfangsseitigen Abtasttaktes auf die Rahmen- und Phasenlage der Zeichen eines empfangenen Zeichenstromes, welcher in periodischen Zeitabständen ein Rahmenkennungswort enthält, in der mit einem digitalen Korrelator aus dem empfangenen und mit dem Abtasttakt abgetasteten Zeichenstrom und aus einem empfangsseitig gespeicherten Rahmenkennungswort eine Kreuzkorrelationsfunktion gebildet und mit einer ersten Rahmenkennungsschaltung anhand der im Abstand einer Rahmenperiode wiederkehrenden Maxima der Kreuzkorrelationsfunktion ein erster Rahmentakt ermittelt wird.

Bei einer solchen Schaltungsanordnung wird der Rahmentakt aufgrund eines Rahmenkennungswortes durch digitale Korrelation ermittelt, wogegen der Bittakt aufgrund eines zusätzlichen, dem Rahmenkennungswort vorausgeschickten Bitmusters auf eine nicht näher beschriebene Weise ermittelt wird (IEEE-Transactions, Band COM-16, Nr. 4, August 1968, S. 597 bis 605). Diese Schaltungsanordnung ist für Satelliten-Nachrichtenübertragungssysteme mit Zeitmultiplex-Vielfachzugriff bestimmt, es stellt sich aber auch bei leitungsgebundenen Zeitmultiplex-übertragungssystemen, beispielsweise bei der Zweidraht-Vollduplexübertragung über Teilnehmeranschlußleitungen einer Fernsprechvermittlungsstelle das Problem, den Rahmentakt und die Phase des Abtasttaktes auf die empfangenen digitalen Zeichen zu synchronisieren. Dies ist insbesondere dann schwierig, wenn die empfangenen digitalen Zeichen stark verzerrt sind und erst nach Ermittlung der geeigneten Phase des Abtasttaktes entzerrt werden können.

Einer älteren Patentanmeldung DE—A—3227151 liegt die Aufgabe zugrunde, eine Schaltungsanordnung der eingangs genannten Art zu schaffen, die auch für einen Empfangszeichenstrom mit starker Verzerrung geeignet ist. Diese Aufgabe wird dadurch gelöst, daß eine Phasensynchronisationsschaltung vorhanden ist, die aufgrund von Werten, welche die Kreuzkorrelationsfunktion jeweils in der Umgebung des erkannten wiederkehrenden Maximums hat, eine Steuerinformation zur Nachstellung der Phase des Abtasttaktes ableitet und diese Phase damit nachstellt. Es ist darüber hinaus eine Schaltungsanordnung zur Synchronisierung von Taktsignalen bekannt, bei der die Abweichung eines charakteristischen, periodisch auftretenden Parameters des empfangenen Signals zu zwei verschiedenen Zeitpunkten gemessen und aus den beiden Werten der jeweilige Mittelwert eines Fehlersignals bestimmt wird. Mit diesem Fehlersignal wird die Taktphasenlage solange nachgestellt, bis das Fehlersignal verschwindet. Als charakteristischer Parameter wird zum Beispiel die Umhüllende des empfangenen Signals verwendet (DE—OS 27 29 312). Diese Art der Taktsynchronisierung ist aber speziell für eine Datenübertragung mit Phasentastmodulation bestimmt, und der dafür erforderliche apparative Aufwand ist recht groß.

Die in der älteren Anmeldung beschriebene Taktrückgewinnung setzt voraus, daß die Polarität des Empfangssignals bekannt ist. Dies ist aber nicht immer gewährleistet, da es zum Beispiel möglich ist, daß die a- und die b-Ader des Teilnehmeranschlußes vertauscht werden.

Der Erfindung liegt die Aufgabe zugrunde, den Bit- und den Rahmentakt aus einem empfangenen Zeichenstrom beliebiger Polarität abzuleiten.

Diese Aufgabe wird bei einer Schaltungsanordnung der eingangs genannten Art erfindungsgemäß dadurch gelöst, daß in einer zweiten Rahmenkennungsschaltung anhand der im Abstand einer Rahmenperiode wiederkehrenden Minima der Kreuzkorrelationsfunktion ein zweiter Rahmentakt ermittelt wird; daß in einer Taktauswahlschaltung festgestellt wird, welcher der beiden Rahmentakte innerhalb eines begrenzten Zeitintervalls empfangen wird, und daß aus diesem Rahmentakt in einer Phasensynchronisationsschaltung eine Steuerinformation zum Nachstellen der Phase des Abtasttaktes abgeleitet wird.

Vorteilhafte Weiterbildungen der Erfindung sind in den Unteransprüchen gekennzeichnet.

Mit der Erfindung läßt sich insbesondere auch das Phasennachstellkriterium verbessern.

Ein Ausführungsbeispiel der Erfindung wird im folgenden anhand der Zeichnung erläutert. Es zeigen:

Figur 1 das Grundprinzip der Erfindung anhand einer vereinfachten Folge von Werten der Kreuzkorrelationsfunktion

1a: im nichtphasensynchronen Zustand des Abtasttaktes,

1b: im phasensynchronen Zustand des Abtasttaktes;

Figur 2 ein Blockschaltbild der erfindungsgemäßen Schaltungsanordnung;

Figur 3 eine in der Schaltungsanordnung nach Figur 2 verwendete Phasensynchronisationsschaltung;

Figur 4 einen in der Synchronisationsschaltung nach Figur 3 vewendeten Glättungsakkumulator;

Figur 5 einen in der Schaltungsanordnung nach Figur 2 verwendete Taktauswahl- und Polaritätssteuerschaltung, und

Figur 6 ein in den zeitlichen Verlauf der verschiedenen Taktsignale in der erfindungsgemäßen Schaltungsanordnung darstellendes Signallaufdiagramm.

An den Eingang der erfindungsgemäßen Schaltungsanordnung gelangen die Abtastwerte des empfangenen, beispielsweise aus ternären Zeichen bestehenden, Zeichenstroms, wobei jedes der ternären Zeichen einmal abgetastet wird. Die im Abtasttakt aufeinanderfolgenden Abtastwerte $X(i)$ werden nun in einem digitalen Korrelator mit einem empfangsseitig gespeicherten Rahmenkennungswort, das beispielsweise aus zwölf binären Zeichen besteht, korreliert, so daß im Abtasttakt aufeinanderfolgende

Werte K(i) der Kreuzkorrelationsfunktion gebildet werden. Mathematisch lassen sich diese Werte ausdrücken als:

$$K(i)= \sum_{v=0}^{11} X(i-v) \cdot W(12-v),$$

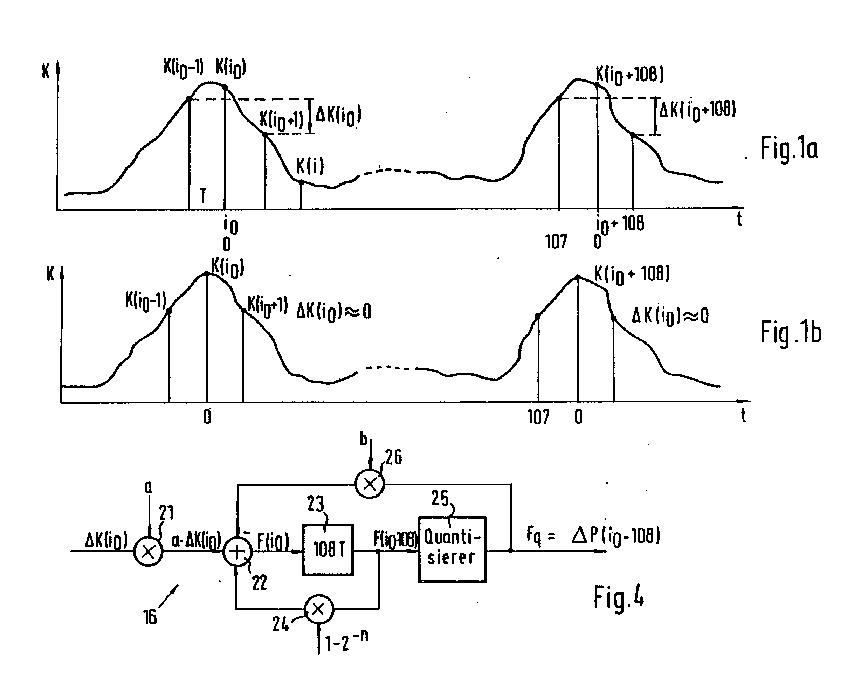

wobei $W(12-v)$ jeweils ein Bit des aus zwölf Bit bestehenden Rahmenkennungswortes ist. Abgesehen von Verzerrungen müßte die Kreuzkorrelationsfunktion $K(i)$ immer dann einen maximalen Wert annehmen, wenn die mit dem Rahmenkennungswort zur synchronisierenden Abtastwerte $X(i-v)$ die Abtastwerte des im Zeichenstrom in Abständen einer Rahmenperiode enthaltenen Rahmenkennungswortes sind. Eine Rahmenkennungsschaltung such nun aus der gesamten Folge $K(i)$ der Werte der Kreuzkorrelationsfunktion die in Abständen einer Rahmenperiode wiederkehrenden relativen Maxima auf. Im Beispiel nach Figur 1a sind dies die Werte mit dem Index $i_0$ bzw. dem Index $(i_0+108)$. Die Indizes unterscheiden sich deshalb um 108 Perioden des Abtasttaktes, weil ein Rahmen bei dem beschriebenen Beispiel aus 108 Zeichen besteht. Ein Rahmen kann aber auch aus z.B. 120 Zeichen bestehen. Bei bekannter Polarität des Empfangssignals teilen die wiederkehrenden relativen Maxima also dem Empfänger den Rahmentakt des empfangenen Zeitmultiplexsignals mit. Würde man beim Abtasten die Abtastperiode gegen Null gehen lassen, so ergäbe sich der in Figur 1 durchgehend gezeichnete vereinfachte Verlauft der Korrelationsfunktion, der zeigt, daß die bei der Abtastung mit einer Abtastperiode T entstehenden Werte $K(i)$ von der Phase des Abtasttaktes abhängig sind. So lassen sich bei der Phasenlage des Abtasttaktes, die in Figur 1a dargestellt ist, die maximal möglichen Werte der Kreuzkorrelationsfunktion gar nicht erfassen. Verschiebt man jedoch die Phasenlage des empfangsseitigen Abtasttaktes auf die in Figur 1b gezeigte Lage, so sind die erkannten wiederkehrenden relativen Maxima $K(i_0)$ auch tatsächlich die echten Maxima der Kreuzkorrelationsfunktion.

Die Kreuzkorrelationsfunktion hat bei geeigneter Wahl des Rahmenkennungsworts die Eigenschaft, daß sie die Impulsantwort der Übertragungsstrecke näherungsweise reproduziert, wobei die Extrema der Kreuzkorrelationsfunktion auch bei den Extrema der Impulsantwort liegen. Die Taktphase welche die Extremwerte der Kreuzkorrelationsfunktion ergibt, ergibt auch die Extremwerte der Impulsantwort und stellt damit auch die gewünschte Taktphase zum Abtasten der empfangenen Zeichen dar.

Zum Nachstellen der Phasenlage des Abtasttaktes werden gemäß der Erfindung Werte der Korrelationsfunktion verwendet, die in der Umgebung des wiederkehrenden Maximums $K(i_0)$ liegen. Beispielsweise kann dazu jeweils der dem wiederkehrenden Maximalwert vorausgehende Wert $K(i_0-1)$ und der dem wiederkehrenden Maximalwert nachfolgende Wert $K(i_0+1)$ verwendet werden. Wie aus Figur 1a ersichtlich, ist die Differenz $\Delta K(i_0)$ dieser Werte von Null verschieden, wenn der Wert $K(i_0)$ nicht der tatsächliche Maximalwert ist. Daher kann diese Differenz als Regelgröße zum Nachstellen der Taktphase verwendet werden. Wie aus Figur 1b ersichtlich, verschwindet die Differenz $\Delta K(i_0)$ dann, wenn $K(i_0)$ der maximal mögliche Wert der Korrelationsfunktion beim gerade vorliegenden Abtastwert $X(i_0)$ ist. Die Figur 1b gibt also die Phasenlage des Abtasttaktes im eingeregelten phasensynchronen Zustand wieder.

Um die Rahmen- und Phasensynchronisation bei beliebiger Polarität des empfangenen Zeichenstroms durchführen zu können, werden erfindungsgemäß wie bereits erwähnt sowohl die Maxima als auch die Minima der Kreuzkorrelationsfunktion ausgewertet. Hierauf wird weiter hinten noch eingegangen.

Der in Figur 1 dargestellte Verlauf der Korrelationsfunktion ist gegenüber dem tatsächlichen Verlauf stark vereinfacht. In Wirklichkeit sind die wiederkehrenden relativen Extrema wegen der starken Verzerrungen des empfangenen Zeichenstroms weitaus schlechter zu erkennen, und den aufeinanderfolgend festgestellten Differenzwerten $\Delta K$ ist eine Zufallsfolge überlagert, so daß die Differenzen erst nach einer Glättung als zuverlässige Regelgröße verwendet werden können.

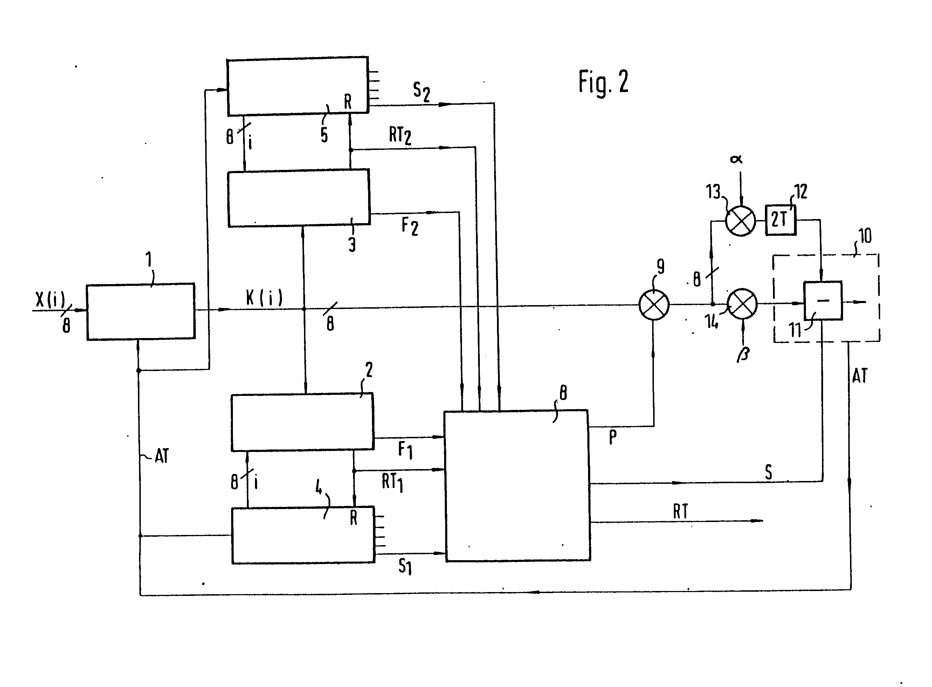

Die erfindungsgemäße Schaltungsanordnung weist einen digitalen Korrelator 1 (Figur 2) auf, auf dessen Eingang die Abtastwerte $X(i)$ der Empfangenen Zeichen jeweils als 8-Bit-Wörter gelangen und der mittels des in ihm gespeicherten Rahmenkennungsworts fortlaufend im Abtasttakt die Werte $K(i)$ der Kreuzkorrelationsfunktion bildet. Dazu wird der digitale Korrelator 1 mit dem gerade vorliegenden Zeichenabtasttakt AT betrieben. Die Werte $K(i)$ der Kreuzkorrelationsfunktion, die ebenfalls 8-Bit-Wörter sind, gelangen auf eine erste Rahmenerkennungsschaltung 2 und auf eine zweite Rahmenerkennungsschaltung 3, die mit einfachen logischen Schaltkreisen die Lage der wiederkehrenden relativen Maxima bzw. Minima der Kreuzkorrelationsfunktion und damit einen ersten Rahmentakt RT1 bzw. einem zweiten Rahmentakt RT2 zu dem empfangenen Zeitmultiplexsignal ermitteln. Die Rahmenerkennungsschaltungen 2, 3 sind jeweils mit einem Modulo-108-Zähler 4,5 verbunden, an deren Zähleingang der Zeichen-Abtasttakt AT anliegt und dessen Zählerstand i zur Ermittlung des Rahmentaktes dient. Der Index i wird deshalb mit Modulo 108 gezählt, weil in dem Ausführungsbeispiel sich das Rahmenkennungswort jeweils nach 108 Zeichen wiederholt. Mit jedem Ausgangssignal der Rahmenerkennungsschaltungen 2, 3, das ein erkanntes wiederkehrendes Maximum bzw. Minimum der Kreuzkorrelationsfunktion bedeutet, werden die Zähler 4, 5 über den jeweiligen Rücksetzeingang R auf einen festen Zählerstand $i_0$, beispielsweise auf Null, zurückgesetzt.

Die Ausgangssignale der ersten Rahmenerkennungsschaltung 2 und der zweiten Rahmenerkennungsschaltung 3 stellen einen ersten Rahmentakt RT1 und einen zweiten Rahmentakt RT2 dar, die einer Taktauswahlschaltung 8 zugeführt werden.

3

Erkennt die erste Rahmenerkennungsschaltung 2 ein periodische wiederkehrendes Maximum der Kreuzkorrelationsfunktion, so ziegt sie dies der Taktauswahlschaltung 8 durch ein Signal F1=1 an. Tritt kein periodisch wiederkehrendes Maximum auf, so wird F1=0 gesetzt. Entsprechend gibt die zweite Rahmenerkennungsschaltung 3 ein Signal F2=1 ab, wenn sie ein periodische wiederkehrendes Minimum der Kreuzkorrelationsfunktion erkennt.

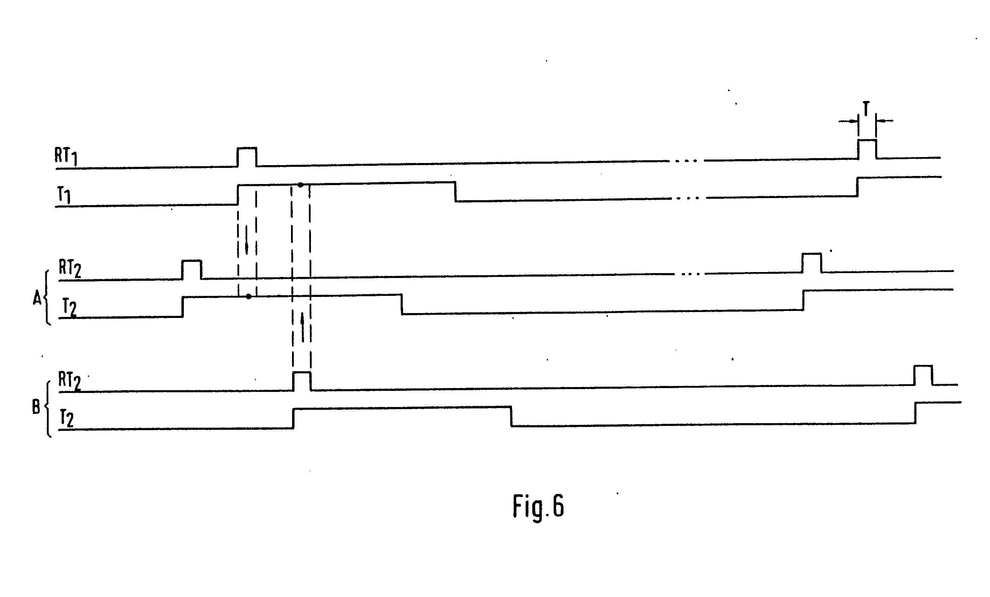

Werden auf diese Weise zwei Rahmentakte RT1 und RT2 generiert, weil die Kreuzkorrelationsfunktion sowohl periodische wiederkehrende Maxima als auch periodisch wiederkehrende Minima aufweist, so kann nur einer der richtige Rahmentakt sein. Der richtige Rahmentakt ist durch den gegenseitigen zeitlichen Verlauf beider Takte bestimmt. Die Takte können entsprechend der tatsächlichen Impulsantwort der Übertragungsstrecke um ein begrenztes Zeitintervall gegeneinander verschoben sein, wobei dieses Intervall kleiner als eine halbe Rahmenperiode sein muß. Bei einem Rahmen von 108 digitalen Zeichen kann das begrenzte Zeitintervall theoretische also maximum etwa 50 Zeichentakte umfassen. In der Praxis—und auch im vorliegenden Ausführungsbeispiel—hat sich aber gezeigt, daß das begrenzte Zeitintervall höchstens 8 Taktschritte beträgt. Die Takte können 2 bis 8 Schritte zeitlich gegeneinander verschoben sein. Der erste Takt, der innerhalb dieser zwei bis acht Schritte auftritt, ist der richtige Rahmentakt. Die Phasenbeziehungen sind aus der noch zu erläuternden Figur 6 ersichtlich. Einzelheiten der Taktauswahlschaltung 8 werden anhand der Figuren 4, 5 und 6 erläutert.

Entsprechend der getroffenen Auswahl wird der als richtig erkannte Rahmentakt RT zu einem Ausgang der Taktauswahlschaltung 8 durchgeschaltet. An einem zweiten Ausgang der Taktauswahlschaltung 8 wird ein Polaritätssignal P abgegeben, das die Werte +1 oder −1 annehmen kann, die ihm ebenfalls in Abhängigkeit von der Taktauswahl zugewiesen werden. Das Polaritätssignal P wird in einem Multiplikator 9 mit den Werten K(i) der Kreuzkorrelationsfunktion verknüpft, so daß die richtige Polarität der Differenz ΔK sichergestellt wird.

Der Rahmentakt RT bestimmt nun, welche Werte der Kreuzkorrelationsfunktion aus dem gesamten Wertevorrat K(i) ausgewählt und zur Bildung der Regelgröße verwendet werden. Wie anhand von Figur 1 erläutert worden ist, sind dies die Werte $K(i_0+1)$ und $K(i_0-1)$, welche in der Umgebung des als wiederkehrendes Maximum erkannten Wertes $K(i_0)$ liegen. Da die Zähler 4, 5 zum Zeitpunkt $i_0$ auf Null gestellt werden, ist der Wert $K(i_0+1)$ dann verfügbar, wenn der Zähler 4, 5 den Zählerstand 1 hat. Sämtliche Werte K(i) gelangen aufeinanderfolgend vom Ausgang des digitalen Korrelators 1 über den Multiplikator 9 zu einer Phasensynchronisationsschaltung 10, die eingangsseitig eine Subtraktionsschaltung 11 enthält. Diese Substraktionsschaltung 11 wird durch ein seinem Steuereingang zugeführtes Steuersignal S nur dann aktiviert, wenn der Zähler 4 oder der Zähler 5 den Zählerstand 1 aufweisen. Dieser Zählerstand wird der Taktauswahlschaltung durch ein Signal S1 bzw. S2 angezeigt und dort nach entsprechender Auswahl in das Steuersignal S umgesetzt.

An dem zweiten Signaleingang der Substraktionsschaltung 11 erscheinen die Ausgangswerte K(i) des digitalen Korrelators 1 mit einer Verzögerung um zwei Perioden T des Abtasttaktes, die durch ein Verzögerungsglied 12 bewirkt wird. Die Funktion zweier den beiden Signaleingängen der Subtraktionsschaltung 11 vorgeschalteter Multiplikatoren 13 und 14 wird weiter hinten erläutert.

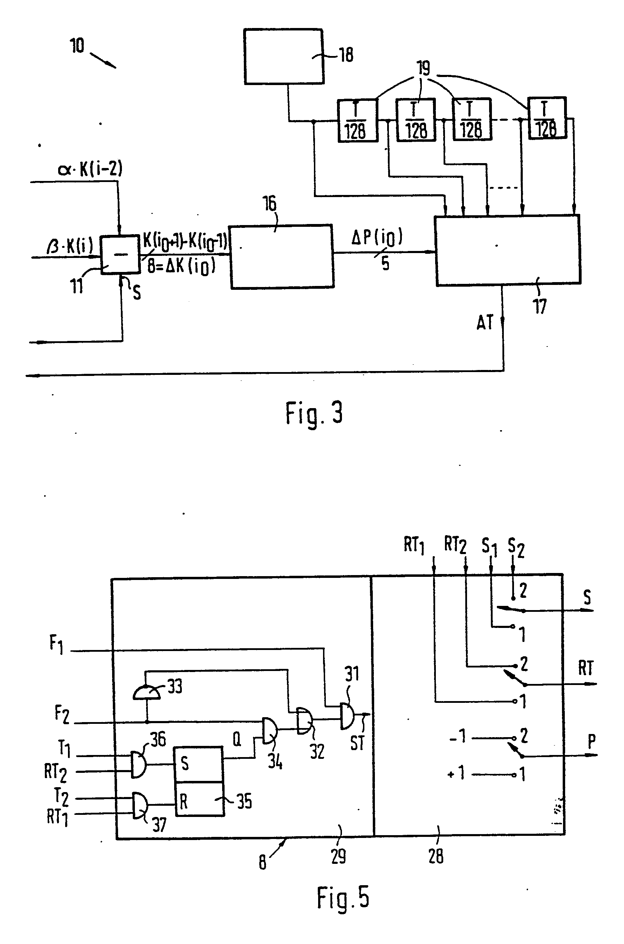

Während das positive Steuersignal S an ihrem Steuereingang anliegt, bildet die Subtraktionsschaltung 11 die Differenz $ΔK(i_0)$ aus den Werten $K(i_0+1)$ und $K(i_0-1)$ der Kreuzkorrelationsfunktion. Die weiteren Bestandteile der Phasensynchronisationsschaltung 10 und die weitere Verarbeitung der gebildeten Differenzwerte wird anhand von Figur 3 erläutert. Es sie aber jetzt schon erwähnt, daß die Phasensynchronisationsschaltung 10 als Ausgangssignal einen Zeichen-Abtasttakt AT erzeugt, der auf den empfangenen Zeichenstrom phasensynchronisiert ist und der dem digitalen Korrelator 1 sowie den Zählern 4 und 5 zugeführt wird.

Untersuchungen an Teilnehmeranschlußleitungen haben gezeigt, daß bei starken Verzerrungen der übertragenen Signale—zum Beispiel bei langen Anschlußleitungen oder beim Vorliegen von sog. "bridged taps"—die zum Einstellen des Abtastzeitpunktes verwendete Funktion

$$ΔK = K(i_0-1) - K(i_0+1)$$

noch optimiert werden kann. Die Signale werden nämlich dabei nach dem Korrelationsmaximum—und deshalb auch nach dem Maximum der Impulsantwort—abgetastet. Dabei ergeben sich ziemlich große Vorschwingungen, deren Entzerrung schwierig ist. Die Entzerrerkoeffizienten werden größer als 1, so daß Stabilitätsprobleme entstehen. Außerdem kann die Geräuschverstärkung des eforderlichen Vorentzerrers unzulässig groß werden. Diese Schwierigkeiten lassen sich in sehr vorteilhafter Weise vermeiden, wenn die Phase nach folgendem Kriterium nachgestellt wird. Der Wert $K(i_0-1)$ wird α− · mal stärker bewertet. Das führt zu folgender Kompensationsfunktion:

$$ΔK' = αK(i_0-1) - K(i_0+1)$$

Der Faktor α kann vorzugsweise die Werte 2, 4 oder 8 annehmen. Bei Teilnehmeranschlußleitungen hat sich α=4 als sehr vorteilhaft herausgestellt.

Die Werte $K(i_0-1)$ der Kreuzkorrelationsfunktion werden in einem Multiplikator 13 mit dem Faktor α multipliziert.

Es gibt Fälle, in denen es günstiger ist, die vorstehende Funktion umzuformen, indem man die durch α dividiert:

$$\Delta K'' = K(i_0 - 1) - \beta K(i_0 + 1)$$

wobei $\beta = 1/\alpha$ ist. Hier werden die Werte $K(i_0 + 1)$ in einem Multiplikator 14 mit dem Wert $\beta$ multipliziert.

In beiden Fällen führt die veränderte Bewertung der Werte der Korrelationsfunktion dazu, daß die Signale vor dem Korrelationsmaximum abgestastet werden. Das hat zur Folge, daß die Vorschwingungen kleiner werden. Ein geringfügiger Verlust in der abgetasteten Intensität des Signalmaximums wird durch eine Verbesserung des Geräschabstandes mehr als ausgeglichen.

Von den beiden Multiplikatoren 13 und 14 ist jeweils nur eine vorhanden oder mit einem von 1 verschiedenen Faktor beaufschlagt.

Die in der Subtraktionsschaltung 11 aufeinanderfolgend gebildeten Differenzwerte $\Delta K(i_0)$ bedürfen wie erwähnt der Glättung, die in einem nachgeschalteten Glättungsakkumulator 16 (Figur 3) durchgeführt wird.

Dieser Glättungsakkumulator 16, der anhand von Figur 4 noch näher erläutert wird, erhält somit jeweils im Rahmentakt einen Eingangswert $\Delta K(i_0)$ und gibt an seinem Ausgang in Abständen, die ebenfalls gleich einer Rahmenperiode sind, eine Nachstellinformation $\Delta P$ ab, die direkt zur Phasennachstellung der Phasen des Zeichen-Abtasttaktes um eine entsprechende Anzahl von Schritten verwendet werden kann. Die Nachstellinformation $\Delta P$ ist vorzugsweise eine ganze Zahl, die auch gleicht Null sein kann. Es reichen für sie einschließlich ihres Vorzeichens fünf Bits, und sie ist in der Lage, eine Torschaltung 17 zur Auswahl der geeigneten Taktphase anzusteuern (Fig. 3).

An einer Reihe von parallelen Eingängen empfängt die Torschaltung 17 den Takt von einem Referenzoszillator 18 mit der Taktperiode $T_{und}$ jeweils einer anderen Taktphase, wobei die Taktphasen an den einzelnen Eingängen der Torschaltung aufeinanderfolgend um jeweils einen kleinen Phasenschritt gegeneinander verschoben sind. Wenn man beispielsweise die Phase des Abtasttaktes in 128 Schritten verstellen will, so gibt man den Referenztakt vom Ausgang des Referenzoszillators 18 auf eine Kette von 128 Verzögerungsgliedern 19, deren jedes die Phase des Taktes um T/128 gegenüber dem in der Kette vorangehenden verzögert. Die vor und nach den Verzögerungsgliedern 19 verfügbaren Takte bilden nun die parallelen Eingangstakte der Torschaltung 17 von denen jeweils nur einer, gesteuert durch die Nachstellinformation $\Delta P$, als der Zeichen-Abtasttakt AT mit der nachgestellten Phase ausgewählt wird.

Die Phasennachstellung in der Torschaltung 17 geschieht derart, daß die Phase um soviel Schritte vor- oder zurückverschoben wird, wie die Nachstellinformation $\Delta P$ einschließlich ihres Vorzeichens angibt. Ist $\Delta P$ beispielsweise gleich +3, so wird in der Torschaltung 17 der gerade durchgeschaltete Takt gesperrt und statt dessen der um 3 weitere Phasenschritte Verzögerte Takt durchgeschaltet. Ist andererseits die Nachstellinformation $\Delta P = -2$, so wird in der Torschaltung 17 von dem gerade durchgeschalteten Takt auf dem um zwei Phasenschrritte weniger verzögerten Takt umgeschaltet, der dann als nachgestellter Zeichen-Abtasttakt AT in der gesamten Schaltungsanordnung verwendet wird. Dieser Zeichnen-Abtasttakt gelangt von der Torschaltung 17 wie bereits erwähnt auf den digitalen Korrelator 1 und die Zähler 4, 5 sowie auf andere Empfangseinrichtungen, die im Takt der empfangenen Zeichen betrieben werden müssen, beispielsweise auf die in der Zeichnung nicht dargestellte Abtast- und Halteschaltung. Die erefindungsgemäße Schaltungsanordnung stellt somit eine digitale Phasenregelschleife dar, die sich dadurch von den bekannten digitalen Phasenregelschleifen unterscheidet, daß sie sowohl eine Rahmensynchronisation als auch eine Zeichentaktsynchronisation durchführt.

Die am Eingang des Glättungsakkumulators 16 (vgl. Figur 4) erscheinenden Differenzwerte $\Delta K(i_0)$ werden in einem Multiplikator 21 mit einem Faktor a multipliziert, der kleiner als 1 ist. Die multiplizierten Werte $a \cdot \Delta K(i_0)$ gelangen auf einen Addierer 22, dessen Ausgangswerte F(i) in einem Vorzögerungsgleid 23 um 108 Perioden T des Abtasttaktes, d.h. um eine Rahmenperiode, verzögert werden. Vom Ausgang des Verzögerungssgleides 23 werden die Funktionswerte F auf einen zweiten Eingang des Addierers 22 zurückgekoppelt und dort wie bei einem üblichen Akkumulator zu den Eingangswerten $a \cdot \Delta K(i_0)$ addiert, um den neuen Wert F zu ergeben. Der Akkumulator ist insofern gegenüber einem üblichen Akkumulator etwas verändert, als die rückgeführten Werte F in einem Multiplikator 24 mit einem Faktor $1 - 2^{-n}$ (n ganzzahlig) multipliziert werden. Der Wert n wird dabei so gewählt, daß dieser Faktor nahe bei 1 liegt. Die Werte F gelangen in Abständen einer Rahmenperiode vom Ausgang des Verzögerungsgliedes 23 auf einen Quantisierer 25, der sie durch betragsmäßige Abrundung in ganze Zahlen $F_q$ umsetzt (Eingangswerte F, die betragsmäßig kleiner als 1 sind, werden dabei auf Null abgerundet).

Somit erscheinen am Ausgang des Quantisierers 25 jeweils in Abständen einer Rahmenperiode ganze Zahlen $F_q$, die positiv, negativ und Null sein können. Diese Ausgangswerte $F_q$ werden schließlich als die oberen erläuterte Nachstellinformation $\Delta P$ verwendet. Außerdem werden sie über einen Multiplikator 26 auf einen weiteren Eingang des Addierers 22 zurückgeführt, wobei sie in dem Multiplikator 26 mit einem Faktor b, der kleiner als 1 ist, multipliziert werden. Der Addierereingang ist ein invertierender Eingang, so daß der zurückgeführte Wert $b \cdot \Delta P$ immer dann von dem Eingangswert $a \cdot \Delta K(i_0)$ subtrahiert wird, wenn eine Phasennachstellung stattgefunden hat (bei $\Delta P = 0$ findet keine Phasennachstellung statt). Somit wird eine erfolgte Phasennachstellung bei der Ermittlung der darauffolgenden Nachstellinformation $\Delta P$ berücksichtigt.

Die beschriebene Akkumulation bewirrt zusammmen mit der Quantisierung die gewünschte Glättung der Differenzen $\Delta K$ und leitet von einer Folge von Werten $\Delta K$, die von einer Zufallsfolge überlagert ist, eine

zuverlässige Regelgröße ΔP ab. Da die Phasennachstellungen, wie vorstehend beschrieben, jeweils nur während der Dauer des Rahmenkennungswortes stattfinden, ist das mit einer Phasennachstellung verbundene unerwünschte Phasenrauschen auf die Intervalle des Rahmenkennungswortes beschränkt und dann daher keine Übertragungsfehler verursachen.

Die Taktauswahl- und Polaritätssteuer-Schaltung 8 besteht aus einer Schaltergruppe 28 und einer Steuerschaltung 29 (Figur 5). Die Schaltergruppe 28 enthält einen ersten Schalter, an dessen beiden Eingängen die von den Zählern 4 und 5 abgegebenen Steuersignale S1 bzw. S2 anliegen, einen zweiten Schalter, an dessen Eingängen die von den Rahmenerkennungsschaltungen 2 und 3 abgegebenen Rahmentakte RT1 bzw. RT2 anliegen, wobei einen dritten Schalter, an dessen Eingängen die Spannungen "−1" und "+1" anliegen. Die Stellung dieser drei Schalter wird durch ein Schaltersteuersignal ST bestimmt, das in der Steuerschaltung 29 erzeugt wird. Hat diese Signal ST den Zustand "H", so nehmen die drei Schalter die aus der Zeichnung ersichtliche Stellung 1 ein, hat das Signal den Zustand "L", so befinden sich die Schalter in der Stellung 2.

Die Steuerschaltung 29 enthält ein UND-Glied 31, an dessen einem Eingang das von der Rahmenerkennungsschaltung 2 abgegebene Signal F1 und an dessen anderem Eingang das Ausgangssignal eines ODER-Gliedes 32 anliegt. An dem Ausgang des UND-Gliedes 31 wird das Schaltersteuersignal ST abgegeben. An einem Eingang des ODER-Gliedes 32 liegt das von der Rahmenerkennungsschaltung 3 abgegebene und in einem Inverter 33 umgekehrte Signal $\overline{F2}$ und an seinem anderen Eingang des Ausgangssignal eines UND-Gliedes 34 an. An dem einen Eingang des UND-Gliedes 34 liegt das Signal F2 und an seinem anderen Eingang das Ausgangssignal Q eines Flip-Flops 35 an. An dem S-Eingang des Flip-Flops 35 liegt das Ausgangssignals eine UND-Gliedes 36 an, das einen ersten Hilfstakt T1 (vgl. Figur 6) mit dem Rahmentaktsignal RT2 verknüpft. An dem R-Eingang des Flip-Flops 35 liegt das Ausgangssignal eines weiteren UND-Gliedes 37 an, das einen zweiten Hilfstakt T2 mit dem von der Rahmenerkennungsschaltung 2 abgegebenen Rahmentaktsignal RT1 verknüpft.

Die noch anhand von Figur 6 zu erläuternden jeweiligen Eingangssignale F1, F2, T1, T2, RT1 und RT2 werden in der Steuerschaltung 29 verknüpft und ergeben ein bestimmtes Schaltersteuersignal ST. Hat dieses den Zustand H oder logisch 1, so sind, die Ausgangssignale der Schaltergruppe und damit der Taktauswahlschaltung 8:

$$S=S1, RT=RT1 \text{ und } P=+1.$$

Hat das Schaltersteuersignal ST den Zustand L oder logisch 0, so sind die Ausgangssignale:

$$S=S2, RT=RT2 \text{ und } P=-1.$$

Die in der zweiten, vierten und sechsten Zeile von oben der Figur 6 dargestellten Signale T1 und T2 sind Hilfstakte, die von den Rahmentaktsignalen RT1 bzw. RT2 generiert werden und die das begrenzte Zeitintervall festlegen, innerhalb dessen die Taktauswahlschaltung 8 ihre Entscheidung trifft. Ihre Länge hängt, wie bereits erwähnt, von dem einzelnen Anwendungsfall ab, im vorliegenden Fall beträgt sie acht Schritte, d.h. 8×T, während eine Rahmenperiode 108 Schritte enthält und eine Zeitdauer von 1 ms aufweist.

In dem in den Zeilen 3 und 4 dargestellten Fall A tritt innerhalb des durch den Hilfstakt T2 festgelegten Zeitintervalls der Rahmentakt RT2 zuerst auf und ist somit der in der Taktauswahlschaltung 8 als der richtige erkannte Rahmentakt.

In dem in den Zeilen 5 und 6 dargestellten Fall B tritt innerhalb des durch den Hilfstakt T1 bestimmten begrenzten Zeitintervalls der Rahmentakt RT1 als erste auf und wird davit durch die Taktauswahlschaltung 8 als der Richtige Rahmentakt erkannt und weitergeleitet.

## Patentansprüche

1. Schaltungsanordnung zur Rahmen- und Phasensynchronisation eines empfangsseitigen Abtasttaktes auf die Rahmen- und Phasenlage der Zeichen eines empfangenen Zeichenstromes, welcher im periodischen Zeitabständen ein Rahmenkennungswort enthält, in der mit einem digitalen Korrelator (1) aus dem empfangenen und mit dem Abtasttakt (AT) abgetasteten Zeichenstrom und aus einem empfangsseitig gespeicherten Rahmenkennungswort eine Kreuzkorrelationsfunktion gebildet und mit einer ersten Rahmenerkennungsschaltung (2) anhand der im Abstand einer Rahmenperiode wiederkehrenden Maxima der Kreuzkorrelationsfunktion ein erster Rahmentakt ermittelt wird, dadurch gekennzeichnet, daß in einer zweiten Rahmenerkennungsschaltung (3) anhand der im Abstand einer Rahmenperiode wiederkehrenden Minima der Kreuzkorrelationsfunktion ein zweiter Rahmentakt ermittelt wird; daß in einer Taktauswahlschaltung (8) festegestellt wird, welcher der beiden Rahmentakte innerhalb eines begrenzten Zeitintervalls empfangen wird, und daß aus diesem Rahmentakt in einer Phasensynchronisationsschaltung (10) eine Steuerinformation (ΔP) zum Darstellen der Phase des Abtasttaktes (AT) abgeleitet wird.

2. Schaltungsanordnung nach Anspruch 1, dadurch gekennzeichnet, daß die Steuerinformation (ΔP) aufgrund von Werten

$$\{K(i_0+1), K(i_0=1)\},$$

welche die Kreuzkorrelationsfunktion jeweils in der Umgebung des innerhalb des begrenzten Zeitintervalls erkannten Maximums oder Minimums aufweist, abgeleitet und mit ihr die Phase nachgestellt wird.

3. Schaltungsanordnung nach Anspruch 1 oder 2, dadurch gekennzeichnet, daß in der Taktauswahlschaltung (8) ein Polaritätssignal (P) erzeugt wird, durch das die Polarität der der Phasensynchronisationsschaltung (10) zugeführten Werte {K(i)} der Kreuzkorrelationsfunktion festgelegt wird.

4. Schaltungsanordnung nach einem der vorhergehenden Ansprüche, dadurch gekennzeichnet, daß die Rahmenerkennungsschaltung (8) aufweist:

1) eine Schaltergruppe (28), mit der jeweils des Rahmentaktsignal (RT1, RT2), ein die Polarität der Werte der Kreuzkorrelationsfunktion {K(i)} bestimmendes Signal (P) sowie ein Steuersignal (S) zum Bilden von Differenzen dieser Werte durchgeschaltet werden, und

2) eine Steuerschaltung (29), durch die ein die Stellung der Schaltergruppe (28) festlegendes Schaltersteuersignal (ST) erzeugt wird.

5. Schaltungsanordnung nach Anspruch 4, dadurch gekennzeichnet, daß die Steuerschaltung (29) logische Verknüpfungsglieder (31 bis 37) aufweist, in denen die beiden Rahmentakte (RT1, RT2), zwei das begrenzte Zeitintervalle festlegende und durch die beiden Rahmentakte generierte Hilfstakte (T1 bzw. T2) sowie zwei das Erkennen eines periodisch wiederkehrenden Maximums durch die erste bzw. zweite Rahmenerkennungsschaltung (2, 3) anzeigende Signale (F1, F2) verknüpft werden und daraus das Schaltersteuersignal (ST) erzeugt wird.

6. Schaltungsanordnung nach einem der vorhergehenden Ansprüche, dadurch gekennzeichnet, daß der Phasensynchronisationsschaltung (10) eine Einstelleinrichtung (13, 14) vorgeschaltet ist, durch die die Abtastzeitpunkte vor den Zeitpunkt des jeweiligen Auftretens der Maxima der Kreuzkorrelationsfunktion {K($i_0$)} verschoben werden.

7. Schaltungsanordnung nach Anspruch 6, dadurch gekennzeichnet, daß die Einstelleinrichtung aus einem Multiplikator (13) besteht, mit dem die einem Verzögerungsglied (12), das einem Eingang einer Subtraktionsschaltung (11) vorgeschaltet ist, zugeführten Werte der Kreuzkorrelationsfunktion {K(i)} mit einem Faktor ($\alpha$) größer als 1 multiwerden.

8. Schaltungsanordnung nach Anspruch 6, dadurch gekennzeichnet, daß die Einstelleinrichtung aus einem Multiplikator (14) besteht, mit dem die einem zweiten Eingang einer Subtraktionsschaltung (11) zugeführten Werte der Kreuzkorrelationsfunktion {K(i)} mit einem Faktor ($\beta$) kleiner als 1 multipliziert werden.

## Revendications

1. Agencement de circuits pour la synchronisation de trames et de phases d'une horloge d'échantillonnage du côté réception en relation avec les positions de trames et de phases des signaux d'un flux de signaux reçus, qui contient, à intervalles de temps périodiques, un mot de reconaissance de trame, dans lequel est établie, au moyen d'un corrélateur numérique (1), à partir du flux de signaux reçus et échantillonnées avec l'horloge d'échantillonnage (AT) et à partir d'un mot de reconnaissance de trame, mémorisé du côté réception, une fonction de corrélation en croix, tandis qu'une première horloge de trame est obtenue au moyen d'un premier circuit de reconnaissance de trame (2) à l'aide des maxima, se répétant à intervalles d'une période de trame, de la fonction de corrélation en croix, caractérisé en ce que, dans un second circuit de reconnaissance de trame (3), une seconde horloge de trame est obtenue à l'aide des minima se répétant à intervalles d'une période de trame, de la fonction de corrélation en croix, en ce que dans un circuit de sélection d'horloge (8) est définie laquelle des deux horloges de trame est reçue pendant un intervalle de temps limité et en ce que, à partir de cette horloge de trame, une information de commande ($\Delta$P) est obtenue dans un circuit de synchronisation de phases (10) en vue d'un réglage correctif de la phase de l'horloge d'échantillonnage (AT).

2. Agencement de circuits selon la revendication 1, caractérisé en ce que l'information de commande ($\Delta$P) est obtenue sur la base de valeurs

$$\{K(i_0+1)\ K(i_0-1)\},$$

que possède la fonction de corrélation en croix respectivement au voisinage du maximum ou du minimum détecté à l'intérieur de l'intervalle de temps limité et la phase est soumise à un réglage correctif à l'aide de cette information.

3. Agencement de circuits selon une des revendications 1 ou 2, caractérisé en ce que, dans le circuit de sélection d'horloge (8) est produit un signal de polarité (P) par lequel est établie la polarité des valeurs K(i) de la fonction de corrélation en croix qui sont appliquées au circuit de synchronisation de phases (10).

4. Agencement de circuits selon une des revendications précédentes, caractérisé en ce que le circuit de reconnaissance de trame (8) comporte;

1) un groupe de commutateurs (28) à l'aide duquel respectivement le signal d'horloge de trame (RT1, RT2) un signal (P) déterminant la polarité des valeurs de la fonction de corrélation en croix {K(i)} ainsi qu'un signal de commande (S) sont transmis pour la formation de différences de ces valeurs, et

2) un circuit de commande (29) par laquel est produit un signal de commande de commutateurs (ST) définissant la position du groupe de commutateurs (28).

5. Agencement de circuits selon la revendication 4, caractérisé en ce que le circuit de commande (29) comporte des organes logiques de combinaison (31 à 37) dans lesquels les deux horloges de trame (RT1, RT2), deux horloges auxiliaires (T1 et T2) définissant l'intervalle de temps limité et produits par les deux horloges de trame ainsi que deux signaux (F1, F2) indiquant la reconnaissance d'un maximum, se répétant périodiquement, par le premier ou le second circuit de reconnaissance de trame (2, 3), sont combinés en vue de la génération du signal de commande de commutateurs (ST).

6. Agencement de circuits selon une des revendications précédentes, caractérisé en ce qu'il est prévu en série avec le circuit de synchronisation de phases (10) un dispositif de réglage (13, 14) par lequel les instants d'échantillonnage sont décalés avant l'instant de l'apparition correspondante des maxima de la fonction de corrélation en croix $\{K(i_0)\}$.

7. Agencement de circuits selon la revendication 6, caractérisé en ce que le dispositif de réglage se compose d'un multiplicateur (13) à l'aide duquel les valeurs de la fonction de corrélation en croix $\{K(i)\}$ appliquées à un organe de retardement (12), qui est relié en série avec une entrée d'un circuit de soustraction (11), sont multipliées par un facteur $(\alpha)$ supérieur à 1.

8. Agencement de circuits selon la revendication 6, caractérisé en ce que le dispositif de réglage se compose d'un multiplicateur (14) à l'aide duquel les valeurs de la fonction de corrélation en croix $\{K(i)\}$ appliquées à une seconde entrée d'un circuit de soustraction (11), sont multipliées par un facteur $(\beta)$ inférieur à 1.

**Claims**

1. Circuit arrangement for synchronizing a local sampling clock to the frame position and phase of the characters of a received character stream containing a unique word at regular time intervals, wherein a digital correlator (1) generates a crosscorrelation function from the received character stream, sampled at the sampling clock rate (AT), and a unique word stored at the receiving end, and wherein a first frame detection circuit (2) derives the first frame clock from those maxima of the crosscorrelation function recurring at intervals of one frame period, characterized in that a second frame detection circuit (3) derives a second frame clock from those minima of the crosscorrelation function recurring at intervals of one frame period, that a clock selection circuit (8) determines which of the two frame clocks is being received within a limited time interval, and that from this frame clock, control information $(\Delta P)$ for representing the phase of the sampling clock (AT) is derived in a phase synchronization circuit (10).

2. A circuit arrangement as claimed in Claim 1, characterized in that the control information $(\Delta P)$ is derived from values

$$\{K(i_0+1),\ K(i_0-1)\}$$

which the crosscorrelation function has in the vicinity of the maximum or minimum detected within the limited time interval, and is used to adjust the phase.

3. A circuit arrangement as claimed in Claim 1 or 2, characterized in that the clock selection circuit (8) produces a polarity signal (P) which determines the polarity of the values $\{K(i)\}$ of the crosscorrelation function fed to the phase synchronization circuit (10).

4. A circuit arrangement as claimed in any one of the preceding claims, characterized in that the clock selection circuit (8) consists of

1) a group of switches (28) by which the frame-clock signal (RT1, RT2), a signal (P) determining the polarity of the values of the crosscorrelation function $\{K(i)\}$, and a control signal (S) for forming the differences between these values are switched through, and

2) a control circuit (29) which produces a switch control signal (ST) determining the position of the group of switches (28).

5. A circuit arrangement as claimed in Claim 4, characterized in that the control circuit (29) comprises a logic elements (31 to 37) in which the two frame clocks (RT1, RT2), two auxiliary clocks (T1, T2) determining the limited time interval and derived from the two frame clocks, and two signals (F1, F2) indicating the detection of a periodically recurrent maximum by the first and second frame detection circuits (2, 3), respectively, are combined to produce the switch control signal (ST).

6. A circuit arrangement as claimed in any one of the preceding claims, characterized in that the phase synchronization circuit (10) is preceded by an adjusting device (13, 14) which shifts the sampling instants ahead of the instants at which the maxima of the crosscorrelation function $\{K(i_0)\}$ occur.

7. A circuit arrangement as claimed in Claim 6, characterized in that the adjusting device is a multiplier (13) which multiplies the values of the crosscorrelation function $\{K(i)\}$ fed to a delay element (12) ahead of one input of a subtracter (11) by a factor $(\alpha)$ greater than 1.

8. A circuit arrangement as claimed in Claim 6, characterized in that the adjusting device is a multiplier (14) which multiplies the values of the crosscorrelation function $\{K(i)\}$ fed to a second input of a subtracter (11) by a factor $(\beta)$ smaller than 1.

Fig.1a

Fig.1b

Fig.4

Fig. 2

Fig. 3

Fig. 5

Fig. 6